# EUROPEAN PATENT SPECIFICATION

(11) **EP 2 131 466 B1**
(45) Date of publication and mention of the grant of the patent: **04.06.2014**
(21) Application number: 07730412.9
(22) Date of filing: 29.03.2007
(51) Int. Cl.: H02G 3/04, F16L 57/04

(54) **PROTECTIVE SHEATH FOR CABLES, TUBES AND THE LIKE**
SCHUTZMANTEL FÜR KABEL, RÖHREN UND DERGLEICHEN
GAINE PROTECTRICE POUR CÂBLES, TUBES ET ANALOGUE

(43) Date of publication of application: 09.12.2009
(73) Proprietor: Relats, S.A., 08140 Caldes de Montbui (ES)
(72) Inventor: RELATS MANENT, Jordi, E-08140 Caldes De Montbui (Barcelona) (ES)
(74) Representative: Oficina Ponti, SLP
(86) International application number: PCT/ES2007/000171
(87) International publication number: WO 2008/119843

(56) References cited:
- ES-T3- 2 072 435
- FR-A1- 2 881 054
- FR-A1- 2 881 054
- JP-A- 9 327 528
- US-A- 4 989 422
- US-A1- 2006 016 507
- DATABASE WPI Week 199810, Derwent Publications Ltd., London, GB; AN 1998-104315, XP008113913 & JP 09 327528 A (TEIKOKU SEN-I KK) 22 December 1997

## Description

### Object of the Invention

This invention refers to a protective sheath for cables, tubes and the like, and more specifically to a sheath of the type that has an appreciably tubular, longitudinally open arrangement, having a transverse section in the form of a spiral.

### Background to the Invention

Currently it is a usual practice to use protective sheaths for the bunching together and covering of lengthy elements such as bunches of cables, tubes and the like.

In addition to allowing elements that go through the inside to be bunched together these sheaths, especially when dealing with bundles of cables, have the further purpose of absorption that appreciably reduces the noises produced by the banging of these elements against other parts. These sheaths, depending on their make up or constitution, provide mechanical protection to the elements placed on the inside, preventing them from rubbing against other parts and thermal protection or insulation that prevents the accelerated deterioration of the cables or tubes that go through the inside of the sheath when said elements are close to a heat source.

Currently differing protective tubes or sheaths are known about from differing registration precedents that fulfil the previously stated functions to a greater or lesser degree, in each case depending on the level of protection of the constitutive materials of the sheath in question.

The applicant of this invention is the holder, amongst others, of the following utility models: ES 1 050 722 U ES 1 050 726 U, and the patent invention ES 2 190 725 B1.

Said registration precedents make reference to protective tubes or sheaths that are made up from a plurality of differing threads that are woven or braided together and which provide the sheath, depending on their composition, with differing mechanical resistance, thermal insulation and acoustic insulation characteristics.

Specifically in utility model ES 1 050 722 U the tube or sheath or protection is made up first of some polyamide mono-filament threads and secondly of textured polyamide multi-filament threads, the outside of the tube having a protective coating of silicone resin.

In the utility model ES 1 050 726 U the protective tube or sheath is made up of some glass threads or quartz threads.

In the invention patent ES 2 190 725 B1 the protective tube is made up first of some polyamide mono-filament threads, second of some multi-filament threads of textured polyester and third some polyamide or polyester mono-filament threads.

Another existing registration precedent is constituted by the European patent, with publication number EP 0 472 611 B1, that refers to a sound absorbent sheath made from a woven fabric having first and second interwoven threads, both being able to be made of polyester, or one of them of polypropylene and the other of a polyester mono-filament.

FR 2881054 A1 discloses a sheath with the features of the preamble of claim 1. JP 9327538 A discloses a sheath comprising an outer protective coating.

The stated precedents provide the cables, tubes or elements that run through the inside of the sheath with insufficient protection and do not fulfil the current demands for their safe application in specific industries, such as aeronautics.

Therefore, the technical problem that is posed is the obtaining of a sheath that has high resistance to fire and provides low smoke emission on being subjected to direct flame, in spite of this retaining good acoustic insulation and a high degree of mechanical resistance to wear.

### Description of the Invention

The protective sheath for cables, tubes and the like, object of this present invention, is of the type which has a generally tubular arrangement, are longitudinally open and which are made up of threads woven in a knitting machine, it has some constructive characteristics aimed at solving the previously stated problems, giving high resistance to fire, low smoke emission in the case of being subjected to direct flame, good mechanical resistance and a high level of acoustic insulation.

In order to do this, the present invention proposes a sheath according to claim 1.

Owing to the high cost of the stated multi-filament aramide fibre threads, it has been provisioned that these can form part of the sheath in a variable proportion, depending on the degree of fire resistance that it is required to reach, which on the other hand will be determined by the requirements demanded in the field of application that the sheath is aimed at.

### Description of the Figures

In order to complete the description that is being made and for the purpose of providing a better understanding of its characteristics, a set of drawings is attached to this present description in which the figures being by way of illustration and are not by way of limitation on the invention, in which the following is shown:
- Figure 1 shows a perspective view of an example of an embodiment of the protective sheath of the invention.
- Figure 2 shows a diagrammatic view of a transversal section of the sheath shown in the preceding figure, made up solely of a fabric made from a base of multifilament aramide fibre threads and mono-filament polyether threads.
- Figure 3 shows a variation of the embodiment of the protective sheath, with a silicone resin protective coating on its external face.

### Preferred embodiment of the invention

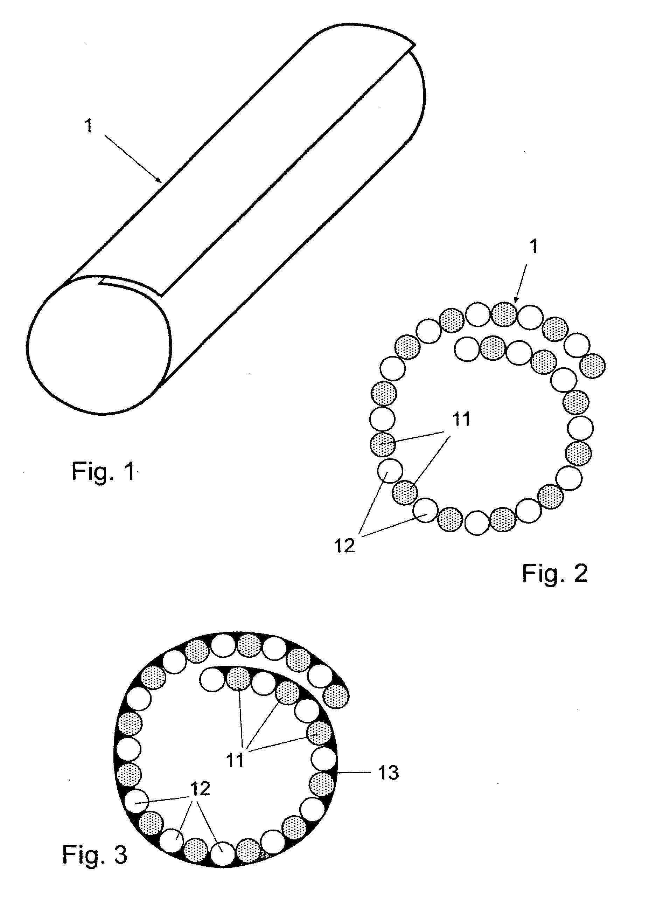

In the example of the embodiment shown in figures 1 and 2, the protective sheath, referenced in its entirety as (1), has a longitudinally open tubular arrangement so as to make the arrangement around the cables, tubes or elements to be protected easier.

Said sheath is made up of a fabric manufactured in a knitting machine and made from some first multi-filament aramide fibre threads (11) and from some second mono-filament polyether threads (12).

In the example of the embodiment shown in figure 2, the sheath has an acrylic or polyurethane plastic resin protective coating (13) on the outer surface.

Once having sufficiently described the nature of the invention, likewise having given a preferred embodiment it is placed on record that the materials, shape, size and arrangement of the elements described can be modified provided that they do not mean an alteration of the basic essentials of the invention that are claimed below.

## Claims

1. Protective sheath for cables, tubes and the like, which sheath has a general longitudinally open tubular shape, that has a transversal cross-section which is a spiral and formed by interwoven threads (11, 12), the sheath comprises a single fabric layer manufacturable in a knitting machine, wherein the fabric has some first multifilament aramide fibre threads (11), with high fire resistance and low smoke emission, interwoven with some second polyetheretherketone (PEEK) monofilament threads (12), **characterised in that** the single fabric layer has a protective coating on its outer surface (13), said protective coating (13) on the outer surface being an acrylic or polyurethane plastic resin.

## Patentansprüche

1. Schutzmantel für Kabel, Röhren und dergleichen, wobei der Mantel eine durchgängig längsseitig offene, röhrenartige Form aufweist, die einen transversalen Querschnitt hat, der eine Spirale ist und durch verwobene Fäden (11, 12) gebildet wird; der Mantel umfasst eine einzelne mit einer Strickmaschine herstellbare Gewebeschicht, wobei das Gewebe einige erste Multifilament-Aramidfaser-Fäden (11) aufweist, mit hoher Feuerbeständigkeit und geringer Rauchemission, verwoben mit einigen zweiten Polyetheretherketon(PEEK)-Monofilament-Fäden (12), **dadurch gekennzeichnet, dass** die einzelne Gewebeschicht eine Schutzbeschichtung auf ihrer äußeren Oberfläche (13) aufweist, wobei die Schutzbeschichtung (13) auf der äußeren Oberfläche ein Acryl- oder Polyurethan-Kunstharz ist.

## Revendications

1. Gaine de protection de câbles, de tubes et similaires, laquelle gaine présente une forme générale tubulaire ouverte de manière longitudinale qui présente une section transversale qui est une spirale et qui est formée par des fils entrelacés (11, 12), la gaine comprend une couche de tissu unique qui peut être fabriquée dans un métier à tricoter, dans laquelle le tissu présente certains premiers fils de fibres aramides à plusieurs filaments (11) qui présentent une résistance au feu élevée et un faible émission de fumée, entrelacés avec certains seconds fils de polyétheréthercétone (PEEK) à un seul filament (12), **caractérisée en ce que** la couche de tissu unique présente un revêtement de protection sur sa surface extérieure (13), ledit revêtement de protection (13) sur la surface extérieure étant une résine de matière plastique acrylique ou polyuréthane.
